# EUROPEAN PATENT APPLICATION

(11) **EP 1 308 087 A2**
(43) Date of publication of application: **07.05.2003**
(21) Application number: 02023517.2
(22) Date of filing: 22.10.2002
(51) Int. Cl.: A01K 5/01, A01K 7/00

(54) **System for suspension of a bucket on a surface**

(30) Priority: 31.10.2001 DK 200101608
(71) Applicant: OK Plast v/ John Orla Falck Hansen, 8700 Horsens (DK)
(72) Inventor: Hansen, John Falck, 8000 Arhus C (DK)
(74) Representative: Gregersen, Niels Henrik

(57) **Abstract**

System for the suspension of a bucket (10) on a wall surface, and comprising a lockable wall bracket (1) for mounting on the substantially vertical wall surface, a bucket (10) with a flat side (11) with a bent edge part (12) and a downwards extending edge part (13), and a handle (20) with a shape corresponding to a circumferential part of the upper edge of the bucket comprising said edge parts (12, 13), where said wall bracket (1) is provided as a preferably moulded unit with a preferably rectangular base (2) and with an upper supporting part (3) provided in front at a distance, preferably with the same width as the base (2) and connected to this via a cranked transition piece (4), wherein said supporting part (3) comprises a width corresponding to said edge parts (12, 13) of the bucket, wherein the base (2) in a section comprises a locking means (6) arranged for interacting with a complementarily shaped locking means (14, 15) in a section of said downwards extending edge part (13) of the bucket when said edge parts (12, 13) of the bucket are supported by the supporting part (3).

## Description

The present invention relates to a system for suspension of a bucket on a surface comprising a wall bracket and a bucket according to the preamble of claim 1.

When feeding and watering domestic animals various methods are used, depending on the number of domestic animals and space conditions. For example automatic feeding and watering is preferably used for large livestock units of cows and pigs.

In small livestock units or hobby animal husbandry, for example sheep and horse keeping, feeding and watering is performed manually, for example by placing buckets with water and feed on the ground. This has some advantages, for example in that transport of feed/water in a bucket is easy and without problems, in that cleaning of the buckets is easy, and that a bucket containing water is not damaged by frost. Another important advantage of using buckets for both feeding and watering is that it is easy to control whether the animal is getting the correct feed dose and sufficient water.

However, there are also disadvantages of feeding and watering animals using a bucket placed on the ground because there is a risk that the animals can overturn the bucket spilling the content, or that the animals step on or step into the bucket thereby risking that the animals get injured and the bucket damaged.

To encounter these disadvantages various systems for suspension of a bucket on a wall surface are produced. The systems can be divided into two groups: A group where a metal frame is mounted on wall surface into which metal frame an ordinary bucket is placed. In the second group a bracket or hook, for example in the form of a snap hook, bull hook, firemans hook or the like is provided mounted on a wall surface, wherein a bucket is suspended by connecting the hook/wall bracket with the bucket handle. The other group furthermore comprises a double wall bracket of metal or plastics with fittings that engage in slots along the upper edge of the bucket back. Common to both types of systems is that they have a number of disadvantages.

By mounting a metal frame in a spaciously restricted area, for example in a horse box or a trailer, the following disadvantages appear: the risk that the animal (horse) may injure itself by bumping into, rubbing against, or biting into the metal frame when there is no bucket in it. The metal frame takes up a considerable part of the spaciously restricted area. The horse can kick or push the bucket up off the metal frame thus spilling the content.

By mounting a hook or a wall bracket in a spaciously restricted area, for example a horse box, the following disadvantages appear: the risk that the animal (horse) may injure itself by bumping into, rubbing against, or biting into the hook or the wall bracket, which typically are made of metal. Normally the horse will, however, not be able to empty the bucket of water or feed because the handle is inclining over the opening of the bucket and thus is in the way of the animal's head. However, it is difficult to mount and dismount the bucket on a hook in such a way that the bucket is protected against sideward movement when the horse moves its head inside the bucket, which may cause spill of feed or water. Generally, the bucket and suspension bracket are not produced in a quality that can sustain usage by big animals.

It is the object of the invention to provide a system comprising a lockable bracket and a bucket, and wherein the choice of material and embodiment considers animal welfare and at the same time makes it easy to suspend and dismount the bucket, which also is easy to mount and dismount.

This is achieved with a system comprising a wall bracket and a bucket of the type described in the introduction, which is characterised by the features specified in the characterising part of claim 1. This embodiment of the wall bracket ensures a very large strength although the wall bracket is preferably moulded in polypropylene.

Below a system is described comprising a wall bracket and a bucket for use when feeding and watering horses, but the invention can be used for other types of domestic animals or in other contexts where a container is to be suspended.

In order to be able to easily suspend and dismount a bucket on a wall surface and at the same time ensure that a horse does not push the bucket in such a way that the bucket is lifted out of the wall bracket when it is suspended on a wall surface, the system is provided in such a way that the system comprises a lockable wall bracket for mounting on the substantially vertical wall surface, a bucket with a flat side with a bent edge part and a downwards extending edge part, and a handle with a shape corresponding to a circumferential part of the upper edge of the bucket comprising said edge parts, where the wall bracket is provided as a preferably moulded unit with a preferably rectangular base and with an upper supporting part situated provided in front at a distance, preferably with the same width as the base and connected to this via a cranked transition piece, wherein said supporting part comprises a width corresponding to said edge parts of the bucket, where the base in a section comprises a locking means arranged for interacting with a complementarily shaped locking means in a section of said downwards extending edge part of the bucket when said edge parts of the bucket are supported by the supporting part.

In the preferred embodiment of the invention, the locking means on the wall bracket is a projection arranged in continuation of the base and behind the supporting part, whereas the complementary locking means on the downwards extending edge part of the bucket is a recess with a bottom piece. The locking of the bucket to the wall bracket is performed by placing the bent and downwards extending edge parts of the bucket over the supporting part. By means of gravity the bucket will tilt towards the ribs and the bottom piece in the recess of the bucket will tilt inwards and under the projection of the wall bracket.

To increase the stiffness and strength of the wall bracket a number of preferably mutually parallel ribs are provided which extend downwards from the supporting part towards the lower edge of the base, and which in relation to the wall surface extend obliquely towards this. Thus, a bucket suspended in the wall bracket will support the flat side towards the ribs, and the upper edge of the bucket will incline slightly in relation to the horizontal plane. Ribs are preferably distributed evenly across the base so that there is a rib at each side edge of the base.

To be able to keep the bucket in place in the wall bracket, the supporting part is shaped in such a manner that it corresponds to the inside shape of the bucket's bent and downwards extending edge parts, which in combination with the fact that the wall bracket width corresponds to the width of the flat side of the bucket causes the bucket to be robustly fixed to the wall bracket and the bucket will not be considerably influenced by the sideward movements arising when a horse puts its head down the bucket for water or feed.

To dismount the bucket, the bucket is effected on its side or under its bottom in such a manner that the bucket does not rest in against the ribs whereby the bottom piece of the recess of the bucket will be released from the projection and the bucket can now easily be lifted free off the supporting part.

In order to be able to mount the wall bracket on a wall surface, the base between the ribs is provided with holes for fixing. To ensure flexibility and durability of the wall bracket, it has been found that the holes in the base need to be a bit larger than the screws, bolts or the like used for fixing the wall bracket.

In an alternative embodiment of the invention, it is conceivable that the wall bracket for mounting on posts, fence posts or the like comprises a mounting plate with belonging brackets and bolts.

Wall bracket and bucket are preferably produced by mould injection of a suitable material, for example polypropylene or a similar plastic material.

In order to protect the horse from hurting itself by rubbing against or bumping into the wall bracket, the wall bracket is provided with a shape without sharp edges and corners.

The shape of the handle, which corresponds to a circumferential part of the upper edge of the bucket, which comprises the flat side, enables a straight supporting piece of the handle to be placed and/or fixed between the upper bent edge part of the bucket and the wall surface which ensures that the handle is not in the horse's way when it puts its head down the bucket. The handle may be provided with a preferably central carrying grip which then is adapted for fixing between the wall and the bucket.

Furthermore, a fixed handle, as opposed to a handle hanging loosely on the front side, will not be a source of sounds which may frighten the horse and will not constitute an unnecessary risk of injuries to the horse when it puts its head down the bucket.

The handle is placed in such a way that it, in spite of the asymmetrical shape of the bucket, is placed across the centre of gravity of the bucket, which will typically be a little displaced from the centre of the opening of the bucket.

When developing a series of several types of buckets with different forms and volumes, it is an advantage that the widths of the flat side of the bucket and its bent and downwards extending edge parts always are the same so that the same wall bracket can be used for suspending any bucket.

In an alternative embodiment of the invention it is conceivable that a preferably oblong unit can be suspended on two or more wall brackets or on a custom-made wall bracket that allows for the length of the unit.

The advantages of using the system for suspension of a bucket on a wall surface as described in the invention are the following:
- animal welfare is increased as safety is increased,
- unnecessary spill of feed and water is avoided,
- a bucket is easy to handle and clean, and
- easy mounting and dismounting of the bucket.

The invention is first and foremost intended for use by persons breeding horses where the invention can be used for example when a horse is in the stable, in the field, being transported or in a show, but it is conceivable that the invention can be used for other purposes where a unit is to be mounted on a wall surface, post or the like, for example a flowerbox where one or more wall brackets are mounted on the railing, a flowerpot where the wall bracket for example is mounted on a telephone pole, a box in a shelf system where one or more wall brackets are mounted on a wall, a feed trough for small domestic animals, for example birds, hamsters and the like.

The invention is described in more detail below, with reference to the drawing in which
- fig. 1: shows a front, side and perspective view of the wall bracket,
- fig. 2: shows a front, side and perspective view of the bucket,
- fig. 3: shows a view of the handle for the bucket shown in fig. 2,
- fig. 4: shows a front, side and perspective view of the bucket in an alternative embodiment, and
- fig. 5: shows a front, side and perspective view of the bucket in a second alternative embodiment.

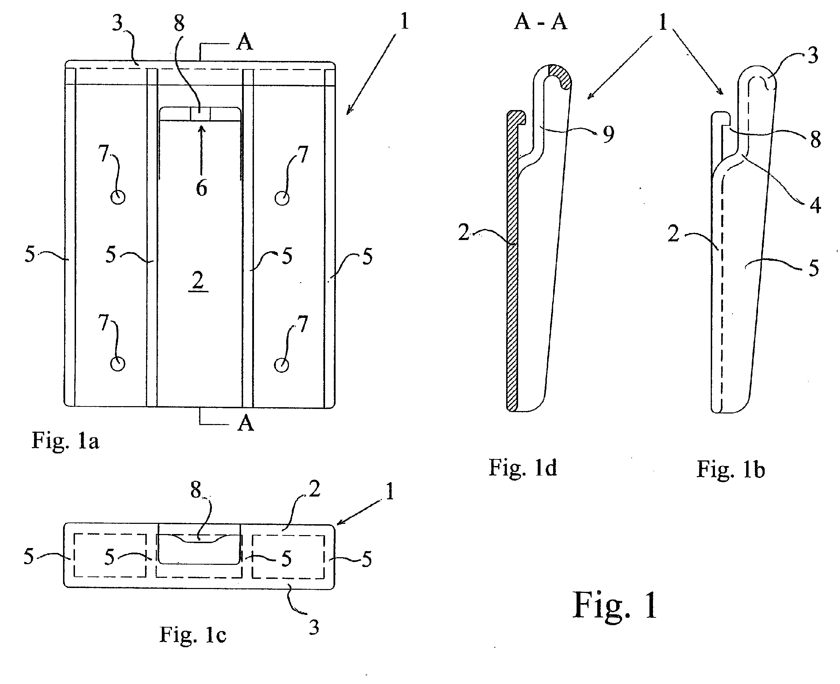

In the embodiment shown in fig. 1 the wall bracket 1 is seen in a front view fig. 1a, in a side view fig. 1b, and a perspective view fig. 1c. The wall bracket 1 is provided with a rectangular base 2, an upper supporting part 3 in the front, which supporting part is connected with the base 1 via a cranked transition piece 4. On the base 1, four ribs 5 are distributed evenly across the width of the base 2. In this embodiment the locking means 6 is a centrally arranged projection 8 which constitutes a section of the width of the base 2. Between the central ribs 5 an opening 9 is formed so that a bucket 10 (cf. below) can be suspended by means of the wall bracket 1. On the base 2 there are four holes 7 for use when mounting the wall bracket 1.

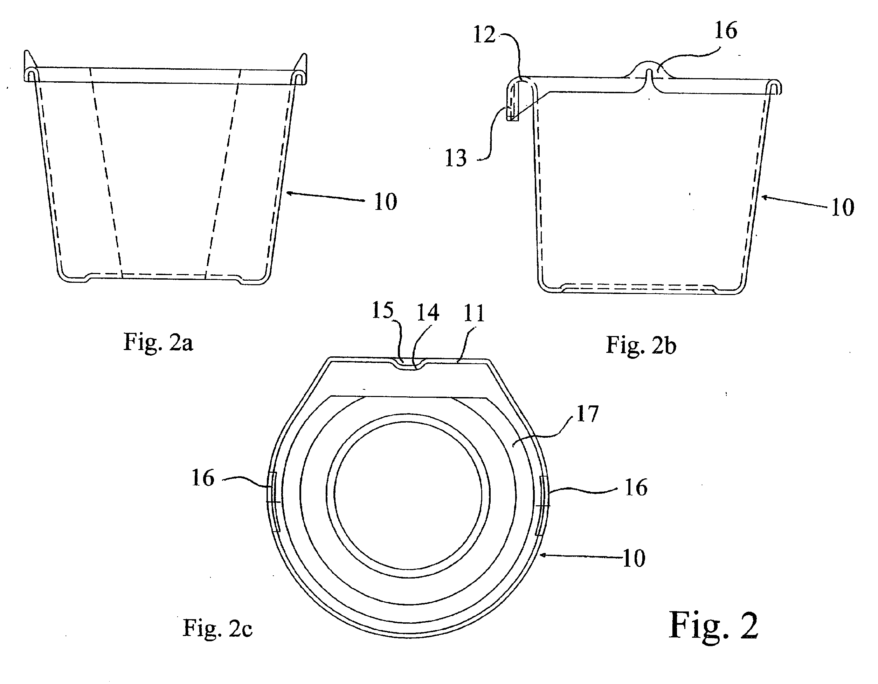

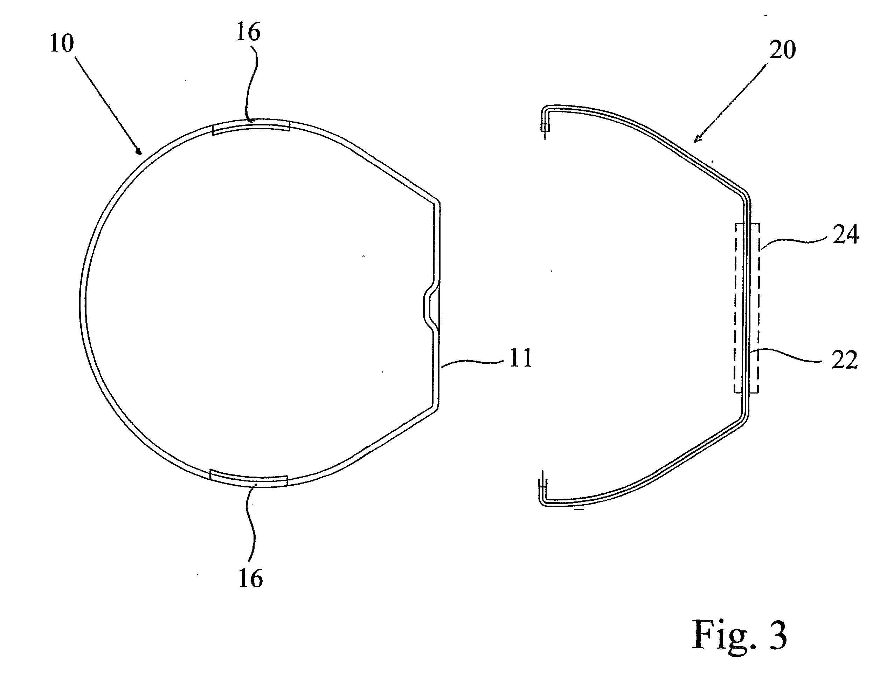

In the embodiment shown in fig. 2, the bucket 10 is seen in a front view fig. 2a, in a side view fig. 2b, and a perspective view fig. 2c. The bucket 10 is provided with a flat side 11 which has a bent edge part 12 and a downwards extending edge part 13. On the downwards extending edge part 13 of its flat side 11, the bucket 10 has a recess 14 with a bottom piece 15 which is a complementary locking means for the locking means 6 shown in fig. 1. Parallel to the flat side 11, the bucket 10 has two eyes 16 placed opposite each other for fastening of the handle 20 shown in fig. 3.

In the embodiment shown in fig. 3 the bucket 10 is seen with a handle 20 which is provided with a shape corresponding to the circumferential part of the upper edge of the bucket 10 comprising the flat side 11. The handle 20, which comprises a straight supporting piece 22, is fastened in the eyes 16. The supporting piece 22 can furthermore comprise a carrying grip 24.

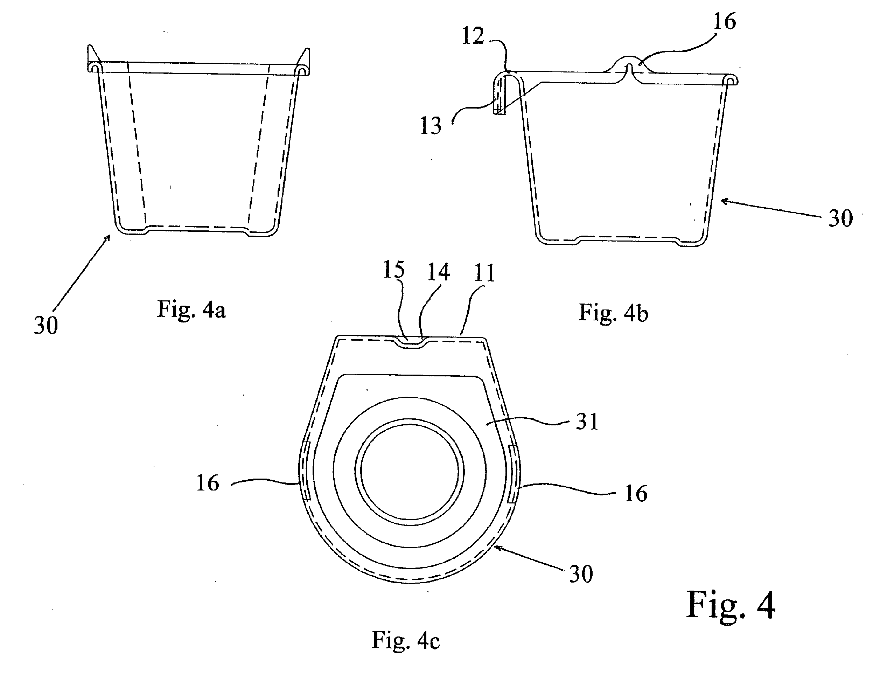

Fig. 4 shows an alternative embodiment of a bucket 30 seen in a front view fig. 4a, a side view fig. 4b, and a perspective view fig. 4c. The bucket 30 comprises the same basic principles as bucket 10, but is of a smaller size. The bucket 30 is provided with a flat side 11, which has a bent edge part 12 and a downwards extending edge part 13. On the downwards extending edge part 13 of its flat side 11, the bucket 30 has a recess 14 with a bottom piece 15 which is a complementary locking means to the locking means 6 shown in fig. 1. Parallel to the flat side 11, the bucket 10 has two eyes 16 placed opposite to each other for fastening of a handle. The smaller size of the bucket 30 in relation to bucket 10 results in the fact that the opening 31 of the bucket 30 is of a different shape than the opening 17 of a bucket 10.

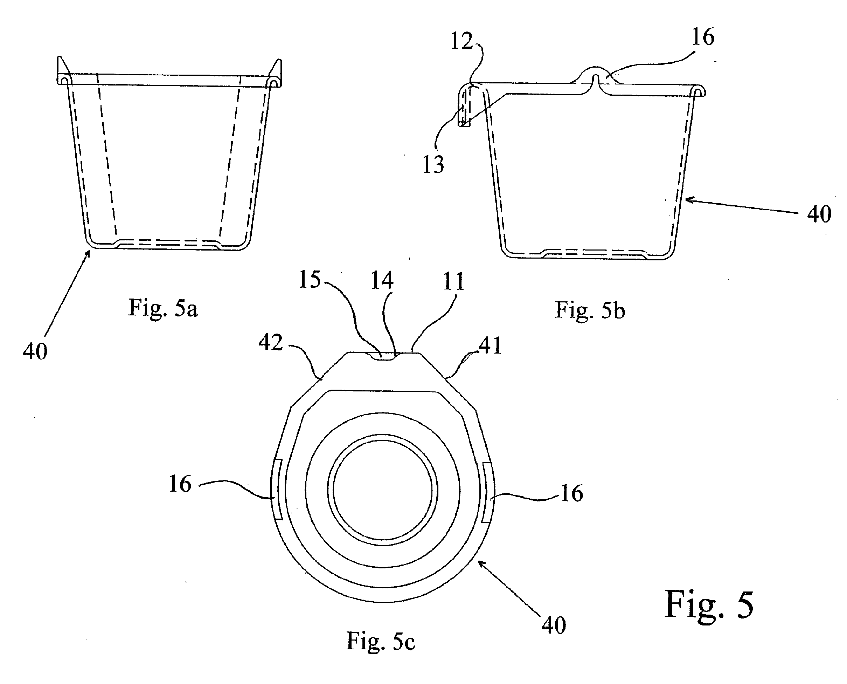

In the alternative embodiment shown in fig. 5, the bucket 40 is seen in a front view fig. 5a, a side view fig. 5b, and a perspective view fig. 5c. The bucket 40 comprises the same basic principles as both bucket 10 and bucket 30, but is intended for placing in a corner. The bucket 40 is provided with a flat side 11, which has a bent edge part 12 and a downwards extending edge part 13. Furthermore, there are two additional flat sides 41 and 42, each connected to its respective edge of the flat side 11 in a 45° angle. On the downwards extending edge part 13 of its flat side 11, the bucket 40 has a recess 14 with a bottom piece 15. Parallel to the flat side 11, the bucket 10 has two eyes 16 placed opposite each other for fastening of a handle. In this embodiment the wall bracket 1 must be formed in such a way that it can be mounted into a comer.

The invention is not restricted to the embodiments shown in the drawings and described above. Other embodiments with other types and sizes of brackets and buckets are conceivable within the scope of this invention.

## Claims

1. System for suspension of a bucket on a wall surface comprising a lockable wall bracket for mounting on the substantially vertical wall surface, a bucket with a flat side with a bent edge part and a downwards extending edge part, and a handle with a shape that corresponds to a circumferential part of the upper edge of the bucket comprising said edge parts, **characterised in that** said wall bracket is provided as a preferably moulded unit with a preferably rectangular base and with an upper supporting part provided in front at a distance, preferably with the same width as the base and connected with this via a cranked transition piece, wherein said supporting part has a width corresponding to said edge parts of the bucket, wherein the base in a section comprises a locking means arranged for interacting with a complementarily shaped locking means in a section of said downwards extending edge part of the bucket when said edge parts of the bucket are supported by the supporting part.

2. System according to claim 1, **characterised in that** the wall bracket is provided with a number of preferably mutually parallel ribs which extend downwards from said supporting part towards the lower edge of the base, and which in relation to said wall surface extend obliquely towards this, and that said wall bracket between two ribs is designed with an opening with a wall part in the back with a locking means arranged for interacting with a complementary locking part of the bucket.

3. System according to claim 1, **characterised in that** said supporting part at the top has a shape corresponding to the inside shape of said edge parts of the bucket.

4. System according to claim 1, **characterised in that** said base between said ribs is provided with holes for fixing on said wall surface.

5. System according to claim 1, **characterised in that** said supporting part of said wall bracket is arranged at a distance from the back of said wall bracket such that a straight supporting part of said handle can be fixed between the wall and said edge parts of the bucket.

6. System according to claim 1, **characterised in that** said wall bracket and bucket are preferably produced by mould injection of a suitable material.
